# EUROPEAN PATENT SPECIFICATION

(11) **EP 2 794 255 B1**
(45) Date of publication and mention of the grant of the patent: **19.06.2019**
(21) Application number: 12820875.8
(22) Date of filing: 19.12.2012
(51) Int. Cl.: B31B 50/25, B31F 1/07, B31F 1/10, G01B 21/18

(54) **APPARATUS AND METHOD FOR INDICATING THE DEPTH OF A CREASE LINE IN A MATERIAL**
VORRICHTUNG UND VERFAHREN ZUR ANZEIGE DER TIEFE EINER FALTENLINIE IN EINEM MATERIAL
APPAREIL ET PROCÉDÉ INDIQUANT LA PROFONDEUR D'UNE LIGNE DE PLIURE

(30) Priority: 19.12.2011 GB 201121779
(43) Date of publication of application: 29.10.2014
(73) Proprietor: Elopak Systems AG, 8152 Glattbrugg (CH)
(72) Inventor: HARSSON, Harald, N-1383 Asker (NO)
(74) Representative: Turner, Richard Charles
(86) International application number: PCT/GB2012/053185
(87) International publication number: WO 2013/093457

(56) References cited:
- GB-A- 1 060 313
- US-A1- 2005 139 059

## Description

This invention relates to apparatus and a method for checking the depth of a crease line in a material.

When forming container blanks from thermoplastics coated paperboard laminate material (which may or may not include a metallic layer), the flat pieces of material are passed between rotating die cylinders to impart thereon a pattern of crease lines along which folds are to be made during the container construction process to form the final container.

Owing to the particular thickness of the board, these crease lines have to reach a certain depth which is enough for the board to fold where intended, but not too shallow so that the board does not fold where intended and not too deep so that the coated layers of the board crack if the board is deformed too much during the creasing process.

GB 1060313 discloses apparatus and methods for forming lines of severance and scoring in sheet materials. A score line forming device comprises a scoring cylinder having mounted thereto a die plate containing a line scoring element and an embossing element.

US 2005/0139059 A1 discloses a folding rule having areas with different penetration depth.

At present, the checking of the score line depth is inconsistent, very time-consuming and not continued thought out production of the container blanks.

According to one aspect of the present invention, there is provided apparatus for checking the depth of a crease line in a material, the apparatus comprising a crease line forming device comprising a creasing cylinder having mounted thereto a stamping device having stamping portions arranged at a plurality of levels with respect to a surface of said material, the arrangement being such that those portions which contact the material mark the material with an indicator away from the crease line and indicative of the depth of the crease line.

According to a second aspect of the present invention, there is provided a method of checking the depth of a crease line in a material comprising forming a crease line pattern in the material by way of a crease line forming device comprising a creasing cylinder, pressing against the material a stamping device mounted to the creasing cylinder and having a plurality of stamping portions at a plurality of levels with respect to a surface of said material, and thereby marking the material away from the crease line with an indicator indicative of the depth of the crease line.

Owing to these aspects, the checking of the score line depth can be continuous throughout a production process.

A crease line forming device forms the crease lines in the material, the crease lines having a certain depth in the material. The forming of the crease lines is preferably carried out by a pair of rotary die cylinders with a sheet of the material passing between the rotating cylinders.

Advantageously, the stamping device leaves a mark on the material as an indicator of crease line depth. The stamping portions are formed by a stepped profile to the stamping device, each stepped portion having a raised indicator forming section which presses into the material. The raised indicator forming sections may be of different shapes, symbols, characters and the like to produce a distinctive pattern on the material surface.

The marking of the material is preferably done at a region of the material which is not important should the stamping device stamp too hard. Such a region is one which is away from any of the crease lines and thus has minimal chance of harming the final container's integrity.

Further embodiments of the invention are defined in the appended dependent claims.

In order that the present invention can be clearly and completely disclosed, reference will now be made, by way of example, to the accompanying drawings in which:-
Figure 1 is a view of a pair of creasing cylinders having a stamping device according to the present invention,
Figure 2 shows side and plan views of a first embodiment of a stamping device according to the present invention,
Figure 3 is a schematic diagram of the stamping device of Figure 2 and the arrangement of its stamping portions in relation to crease line depth,
Figure 4 is similar to Figure 2, but of a second embodiment, and
Figure 5 is a diagram similar to Figure 3, but of the second embodiment.

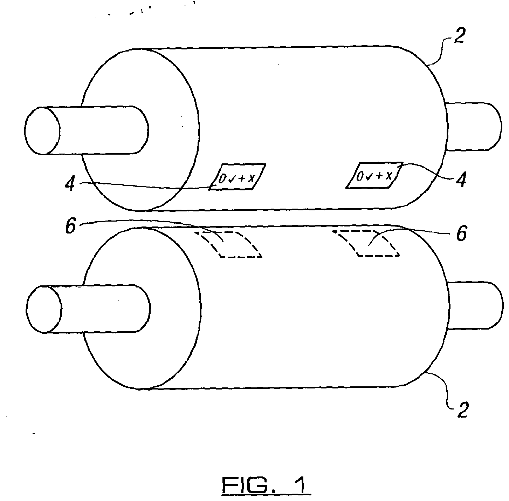

Referring to Figure 1, a pair of creasing cylinders 2 (without the crease line pattern shown for simplicity) are mounted one above the other and rotatable in opposite directions about respective axes arranged substantially parallelly to each other. One of the cylinders 2 (the upper cylinder 2 in Figure 1) comprises at least one stamping device 4 mounted thereto with its longitudinal axis arranged substantially parallelly to the axis of rotation of the cylinder 2. The stamping device serves to press against the surface of a material, which is preferably a flat piece of plastics-coated paperboard material for forming a container blank. In Figure 1, the upper creasing cylinder 2 includes two such stamping devices 4 arranged at respective opposite side regions of the upper creasing cylinder 2. This arrangement serves to control crease line depth across the full width of the pair of cylinders 2. For instance, if three lanes of pieces of material are to pass through the single pair of cylinders 2, the two outer lanes will have the crease line depth checked by the stamping devices 4 and if that crease line depth is within an acceptable range for the particular type of material, then the central lane must also be acceptable.

Since the stamping devices 4 in the upper cylinder 2 will project a small amount beyond the outer surface of the upper creasing cylinder 2, this upper cylinder 2 can be referred to as the male cylinder. In the lower cylinder 2, there are at corresponding locations to the stamping devices 4 in the male cylinder, respective recesses 6. The recesses 6 may be used for inserting adjustment blocks to allow for fine tuning of the crease line depth checking arrangement, or for receiving the stamping devices 4 if it is preferable that they are on the lower female cylinder. Such an arrangement of a male and female cylinder results in an easier repair process if the stamping devices 4 of one cylinder should hit and thereby damage the opposite cylinder, since the relatively small stamping device(s) 4 will be the only part which needs replacing instead of having to send away a whole cylinder unit for surface repair.

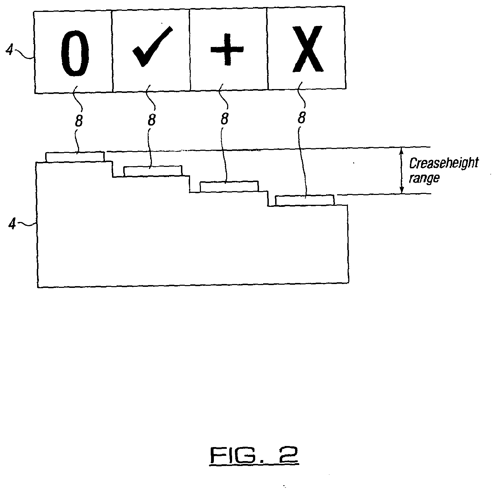

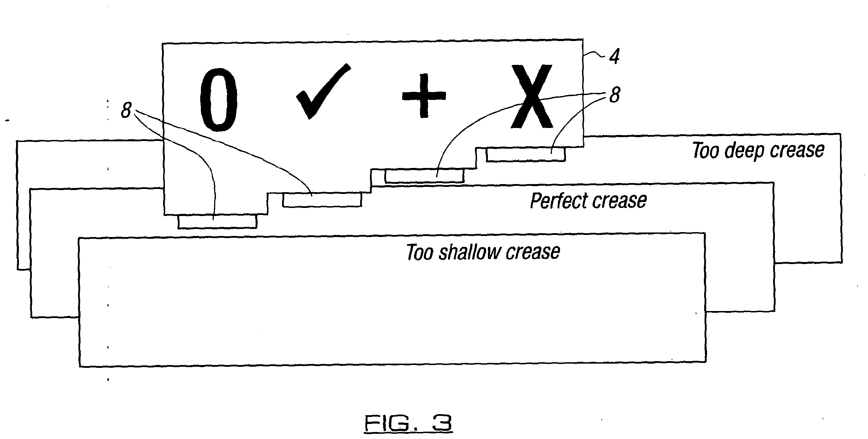

Referring to Figures 2 and 3, the stamping device 4 has a stepped profile and each step, four shown, includes a stamping portion 8, which can be of any desired pattern, such as the "0", "✔", "+" and "X" symbols shown. Each symbol is arranged at a different height above the surface of the material against which it is to be pressed in a region of the material which is not important should the stamping device stamp too hard. Such a region is one which is away from any of the crease lines and thus has minimal chance of harming the final container or carton's integrity. Not only should the stamping device be away from the crease lines, but it is advantageous if it is an area of the sheet material blank which is not critical in relation to the constructed carton. Preferably, the stamping device should be arranged to mark the sheet material in an area of one of the bottom closure panels of the carton blank which are, in the erected carton, folded in to form the bottom seal. In this way, the marking is relatively hidden away in the sealed bottom closure, and there is minimal chance of causing any weakness in the carton integrity should the stamping be too deep which may damage the sheet material.

As the surface of the material is contacted by the stamping device 4, one or more of the stamping portions 8 mark their particular symbol into the material. Once the carton blank has exited the pair of creasing cylinders 2, an operator can check for any mark made by the stamping device in the relevant area of the container blank. For instance, if no marking is visually detected, the crease line depth is unacceptably too shallow since not even the lowermost stamping portion 8 has left an indicator mark. If a "0" symbol is visually detected, this could indicate that an acceptably shallow score line is present; with both "0" and "✔" symbols marked that could indicate a preferred crease line depth; with "0", "✔" and "+" symbols marked an acceptably deep crease line depth is present; and with all four "0", "✔", "+" and "X" symbols marked this could indicate a crease line which has been formed too deep since all four stamping portions have been in contact with the material.

The simplest form of the stamping device 4 would include just two different steps in with respect to the surface of the material with two respective stamping portions 8, which, in their simplest form could form marks on the material in the form of one or more dots. In this way, if no mark is visually detected, this could indicate that an acceptably shallow score line is present; if one mark is visually detected that could indicate a preferred crease line depth; and if two marks are visually detected this could indicate a crease line which has been formed too deep. Clearly, if more accurate grading is required, then a stamping portion with more than two steps in its profile can be used.

If different material thicknesses are to be used for the container blanks, the position of the stamping device 4 relative to the surface of the cylinder 2 can be accordingly adjusted by way of shims (not shown), or, as already mentioned, with adjustment blocks added to the recesses 6 of the cylinder 2.

The preferred crease depth range for the particular material being used is defined by the difference in distance between the lowermost portion 8 and the uppermost portion 8, as indicated in Figure 2.

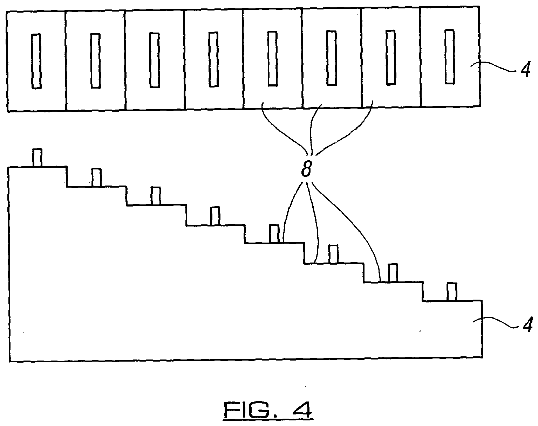

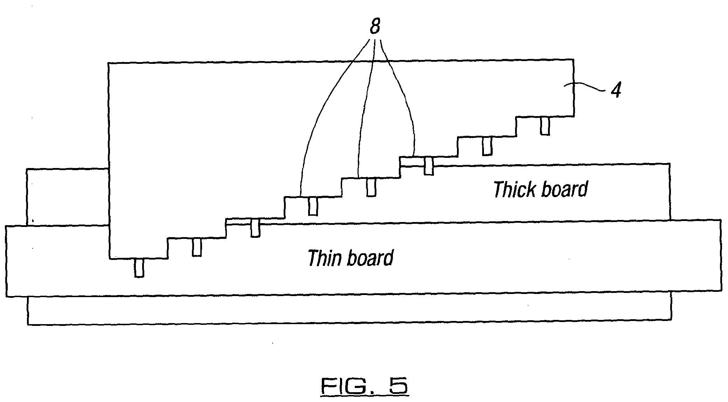

Referring to Figures 4 and 5, the arrangement is similar to that of Figures 2 and 3, except that the marking pattern is simply a line and that there are more steps forming a greater number of stamping portions 8 for different marking depths, so that adjustment of the stamping device within the cylinder 2 is not required when different thicknesses of material are used for the container blanks. Simply by counting the number of stamped lines visible, the operator can see whether the crease line specification for a particular material in use is being met. Referring specifically to Figure 5, it can be seen that the three deepest stamping portions 8 are used in relation to relatively thin material and the four to six deepest portions 8 are used in relation to relatively thick material.

An alternative to marking the material with simple stamped lines is to use numbers. In this way, operators can read the numbers stamped instead of having to count the number of lines.

The use of the stamping device 4 enables the checking of crease line depth to be a continuous process in production and that such checking is reliable by use of the marks made on the material. In addition, this checking also makes it relatively easy to check crease line depth, compared to conventional methods where specialist quality control personnel are required to analyse carton blanks in a laboratory. The present invention allows an operator on the converting line to easily check if the carton blanks are being produced with crease lines within the desired range for a particular board type.

## Claims

1. Apparatus for checking the depth of a crease line in a material, the apparatus comprising a crease line forming device (2) comprising a creasing cylinder (2) having mounted thereto a stamping device (4) having stamping portions (8) arranged at a plurality of levels with respect to a surface of said material, the arrangement being such that those portions (8) which contact the material mark the material with an indicator away from the crease line and indicative of the depth of the crease line.

2. Apparatus according to claim 1, wherein said stamping device (4) has a stepped profile, the stepped parts forming said stamping portions (8).

3. Apparatus according to claim 1 or 2, wherein said stamping portions (8) include raised portions for producing said mark.

4. Apparatus according to claim 3, wherein said raised portions have different shapes.

5. Apparatus according to claim 3 or 4, wherein said raised portions are in the shape of symbols.

6. Apparatus according to any preceding claim, wherein a plurality of stamping devices (4) are mounted in said creasing cylinder (2).

7. Apparatus according to claim 6, wherein said plurality is two and each stamping device (4) is located at respective opposite side regions of said creasing cylinder (2).

8. Apparatus according to any preceding claim, wherein said creasing cylinder (2) is one of a pair of cylinders (2) between which said material passes and the other cylinder (2) of the pair includes a corresponding recess (6) for the or each stamping device (4).

9. A method of checking the depth of a crease line in a material comprising forming a crease line pattern in the material by way of a crease line forming device (2) comprising a creasing cylinder (2), pressing against the material a stamping device (4) mounted to the creasing cylinder (2) and having a plurality of stamping portions (8) at a plurality of levels with respect to a surface of said material, and thereby marking the material away from the crease line with an indicator indicative of the depth of the crease line.

10. A method according to claim 9, wherein the material is a carton blank of a plastics-coated paperboard material and said marking of the material is performed at an area of one of the bottom closure panels of the carton blank.

11. A method according to claim 9 or 10, wherein said checking is by visually inspecting the material.

## Patentansprüche

1. Einrichtung zum Prüfen der Tiefe einer Faltlinie in einem Material, wobei die Einrichtung eine eine Faltlinie bildende Vorrichtung (2) umfasst, die einen Faltzylinder (2) umfasst, der eine daran angebrachte Stanzvorrichtung (4) aufweist, welche Stanzabschnitte (8) aufweist, die im Bezug zu einer Oberfläche des Materials an einer Vielzahl von Ebenen angeordnet sind, wobei die Anordnung derart ist, dass diese Abschnitte (8), welche das Material berühren, das Material mit einem Indikator weg von der Faltlinie und die Tiefe der Faltlinie angebend markieren.

2. Einrichtung nach Anspruch 1, wobei die Stanzvorrichtung (4) ein abgestuftes Profil aufweist, wobei die abgestuften Teile die Stanzabschnitte (8) bilden.

3. Einrichtung nach Anspruch 1 oder 2, wobei die Stanzabschnitte (8) erhobene Abschnitte zum Herstellen der Markierung enthalten.

4. Einrichtung nach Anspruch 3, wobei die erhobenen Abschnitte unterschiedliche Formen aufweisen.

5. Einrichtung nach Anspruch 3 oder 4, wobei die erhobenen Abschnitte in der Form von Symbolen sind.

6. Einrichtung nach einem der vorhergehenden Ansprüche, wobei eine Vielzahl von Stanzvorrichtungen (4) im Faltzylinder (2) angebracht ist.

7. Einrichtung nach Anspruch 6, wobei die Vielzahl zwei ist und jede Stanzvorrichtung (4) an jeweiligen gegenüberliegenden Seitenbereichen des Faltzylinders (2) angeordnet ist.

8. Einrichtung nach einem der vorhergehenden Ansprüche, wobei der Faltzylinder (2) einer von einem Paar von Zylindern (2) ist, zwischen welchen das Material verläuft, und der andere Zylinder (2) des Paars eine entsprechende Aussparung (6) für die oder jede Stanzvorrichtung (4) enthält.

9. Verfahren zum Prüfen der Tiefe einer Faltlinie bei einem Material, umfassend das Bilden eines Faltlinienmusters im Material mittels einer eine Faltlinie bildenden Vorrichtung (2), die einen Faltzylinder (2) umfasst, das Drücken einer Stanzvorrichtung (4), welche am Faltzylinder (2) angebracht ist und eine Vielzahl von Stanzabschnitten (8) im Bezug auf eine Oberfläche des Materials an einer Vielzahl von Ebenen aufweist, gegen das Material und dadurch das Markieren des Materials mit einem Indikator, der die Tiefe der Faltlinie angibt, weg von der Faltlinie.

10. Verfahren nach Anspruch 9, wobei das Material ein Kartonzuschnitt eines kunststoffbeschichteten Pappkartonmaterials ist und die Markierung des Materials in einem Bereich einer der Bodenverschlussklappen des Kartonzuschnitts erfolgt.

11. Verfahren nach Anspruch 9 oder 10, wobei das Prüfen durch visuelle Inspektion des Materials vorgenommen wird.

## Revendications

1. Appareil destiné à vérifier la profondeur d'une ligne de plissage dans un matériau, l'appareil comprenant un dispositif de formation de ligne de plissage (2) comprenant un cylindre de plissage (2) sur lequel est monté un dispositif d'estampage (4) présentant des parties d'estampage (8) arrangées à plusieurs niveaux par rapport à une surface dudit matériau, l'arrangement étant tel que ces parties (8) touchant le matériau marquent le matériau avec un indicateur à distance de la ligne de plissage et indiquant la profondeur de la ligne de plissage.

2. Appareil selon la revendication 1, dans lequel ledit dispositif d'estampage (4) comporte un profil étagé, les parties étagées formant lesdites parties d'estampage (8).

3. Appareil selon la revendication 1 ou 2, dans lequel lesdites parties d'estampage (8) comprennent des parties surélevées pour réaliser ledit marquage.

4. Appareil selon la revendication 3, dans lequel lesdites parties surélevées présentent différentes formes.

5. Appareil selon la revendication 3 ou 4, dans lequel lesdites parties surélevées ont la forme de symboles.

6. Appareil selon l'une quelconque des revendications précédentes, dans lequel une pluralité de dispositifs d'estampage (4) sont montés dans ledit cylindre de plissage (2).

7. Appareil selon la revendication 6, dans lequel ladite pluralité s'élève à deux et chaque dispositif d'estampage (4) se trouve au niveau de régions latérales opposées respectives dudit cylindre de plissage (2).

8. Appareil selon l'une quelconque des revendications précédentes, dans lequel ledit cylindre de plissage (2) est l'un parmi une paire de cylindres (2) entre lesquels ledit matériau passe et l'autre cylindre (2) de la paire comprend une cavité (6) correspondante pour le ou chaque dispositif d'estampage (4).

9. Procédé de vérification de la profondeur d'une ligne de plissage dans un matériau comprenant la formation d'un motif de ligne de plissage dans le matériau à l'aide d'un dispositif de formation de ligne de plissage (2) comprenant un cylindre de plissage (2), la pression, contre le matériau, d'un dispositif d'estampage (4) monté sur le cylindre de plissage (2) et présentant une pluralité de parties d'estampage (8) à plusieurs niveaux par rapport à une surface dudit matériau, marquant ainsi le matériau à distance de la ligne de plissage avec un indicateur indiquant la profondeur de la ligne de plissage.

10. Procédé selon la revendication 9, dans lequel le matériau est une découpe de carton constituée d'un matériau à base de papier cartonné revêtu de plastique, et ledit marquage du matériau est réalisé dans une zone de l'un des panneaux de fermeture inférieure de la découpe de carton.

11. Procédé selon la revendication 9 ou 10, dans lequel ladite vérification consiste en une inspection visuelle du matériau.
